(19) **Europäisches Patentamt European Patent Office Office européen des brevets**

(11) **EP 2 963 166 B1**

(12) **EUROPEAN PATENT SPECIFICATION**

(45) Date of publication and mention of the grant of the patent:
**04.09.2019 Bulletin 2019/36**

(51) Int Cl.:
**D03D 1/00** *(2006.01)* **C08G 69/26** *(2006.01)*
**D03D 15/00** *(2006.01)* **D03D 15/12** *(2006.01)*

(21) Application number: **14756835.6**

(22) Date of filing: **07.02.2014**

(86) International application number:
**PCT/JP2014/052865**

(87) International publication number:
**WO 2014/132775 (04.09.2014 Gazette 2014/36)**

(54) **FABRIC AND MOLDED ARTICLE FORMED BY MOLDING SAME**

GEWEBE UND DARAUS GEFORMTER FORMGEGENSTAND

TISSU ET ARTICLE MOULÉ FORMÉ EN MOULANT CE DERNIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2013 JP 2013038963**

(43) Date of publication of application:
**06.01.2016 Bulletin 2016/01**

(73) Proprietor: **Mitsubishi Gas Chemical Company, Inc.**
**Tokyo 100-8324 (JP)**

(72) Inventors:
• **MATSUMOTO Nobuhiko**
  **Hiratsuka-shi**
  **Kanagawa 254-0016 (JP)**
• **MITADERA Jun**
  **Hiratsuka-shi**
  **Kanagawa 254-0016 (JP)**

(74) Representative: **Vossius & Partner**
**Patentanwälte Rechtsanwälte mbB**
**Siebertstrasse 3**
**81675 München (DE)**

(56) References cited:
**EP-A1- 1 419 875      JP-A- S6 395 915**
**JP-A- 2006 257 573      JP-A- 2006 257 573**
**JP-B1- 4 894 982      JP-B1- 4 894 982**

**Description**

TECHNICAL FIELD

This invention relates to a fiber fabric using specific polyamide resin fibers and continuous carbon fibers. This invention further relates to a molded article obtainable by molding such fiber fabric.

BACKGROUND ART

Fiber reinforced resin-base composite material, configured by combining a fiber material and a matrix resin, has advantages in lightness and high rigidity, so that molded article using the fiber reinforced resin-base composite material has been used widely as mechanical components, components for electric/electronic equipment, vehicle component/member, components for aviation/aerospace equipment, and so forth. The fiber material generally used is carbon fiber.

On the other hand, the matrix resin generally used therefore is thermosetting resin such as unsaturated polyester resin and epoxy resin, from the viewpoints of mechanical strength, affinity to the fiber material, moldability and so forth. The molded article using the thermosetting resin suffers from a critical disadvantage that it cannot be re-melted for molding.

Under such situation, the present applicant disclosed in Patent Literature 1 a polyamide resin-base composite material configured by impregnating a polyamide resin into a fiber material, where the polyamide resin is characterized in that 50% by mole or more of the diamine structural unit is derived from xylylenediamine, that the number-average molecular weight (Mn) of the polyamide resin is 6,000 to 30,000, and that the content of components having a molecular weight of 1,000 or smaller is 0.5 to 5% by mass. EP 1 419 875 A1 discloses a reinforcing fiber substrate formed by at least a reinforcing fiber yarn group arranged with reinforcing fiber yarns in parallel to each other in one direction, wherein a resin material whose main constituent is a thermoplastic resin is provided at 2 to 15% by weight at least on one surface of the reinforcing fiber substrate, and the reinforcing fiber volume fraction Vpf of the reinforcing fiber substrate is in a range of 40 to 60%, a method to produce said reinforcing fiber substrate and a composite material made therefrom.

CITATION LIST

PATENT LITERATURE
[Patent Literature 1] Japanese Patent No. 4894982

SUMMARY OF THE INVENTION

TECHNICAL PROBLEM

Although the polyamide resin-base composite material described in Patent Literature 1 is a highly moldable material, a still better shapability has been required for manufacture of molded articles with more complex three-dimensional shapes. Of course, also mechanical strength of the heat-processed polyamide resin-base composite material is required. In addition, the molded article also necessarily shows a good appearance even after processed under heating. It is therefore an object of this invention to provide a polyamide resin-base composite material, having excellent mechanical strength and good appearance even after processed under heating.

SOLUTION TO PROBLEM

After extensive investigations conducted under such situation, the present inventors found that the above-described problem may be solved by a fiber fabric in which either one of the warp and weft is configured by a polyamide resin fiber composed of a specific polyamide resin composition, and the other is configured by a continuous carbon fiber so as to have a predetermined level of flexure. The finding led us to complete this invention. More specifically, the above-described problems were solved by the means <1> below, and more preferably by the means <2> to <6> below.

<1> A fiber fabric comprising warps and wefts: wherein either one of the warps and the wefts is configured by a polyamide resin fiber composed of a polyamide resin composition, and the other is configured by a continuous carbon fiber; in an arbitrary square area of the fiber fabric, one side of the arbitrary square area is aligned in parallel to the warps, and other one side of the arbitrary square area is aligned in parallel to the wefts, the continuous carbon fiber has an average length 1.1 to 1.6 times longer than the length of a side of the square; the polyamide resin composition contains a polyamide resin in which 50% by mole or more of diamine structural units thereof is derived from xylylenediamine; and wherein the polyamide resin has a number-average molecular weight (Mn) of 6,000 to 30,000, and 0.5 to 5% by mass of the polyamide resin has a molecular weight of 1,000 or smaller.

<2> The fiber fabric of <1>, wherein the polyamide resin fiber has an average length 1.0 to 1.6 times longer than the length of a side of the square.

<3> The fiber fabric of <1> or <2>, having a weight per unit area of 50 to 1000 g/m$^2$.

<4> The fiber fabric of any one of <1> to <3>, wherein the polyamide resin contains 0.01 to 1% by mass of a cyclic compound.

<5> The fiber fabric of any one of <1> to <4>, having a ratio of average fineness of the polyamide resin fiber and average fineness of the continuous carbon fiber (average fineness of polyamide resin fiber/average fineness of continuous carbon fiber) of 20/80 to 80/20.

<6> A molded article obtainable by molding a fiber fabric described in any one of <1> to <5>.

ADVANTAGEOUS EFFECTS OF INVENTION

By the invention, it is now possible to provide a polyamide resin-base composite material having good shapability, high mechanical strength, and good appearance after processed under heating.

BRIEF DESCRIPTION OF DRAWINGS

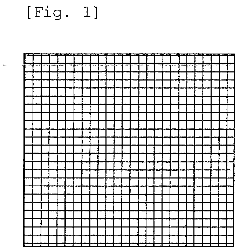

Fig. 1 is a schematic drawing illustrating an exemplary square (X) of the fiber fabric of this invention.

DESCRIPTION OF EMBODIMENTS

This invention will be detailed below. In this specification, every wording of "to" preceded and succeeded by numerals indicates a numerical range inclusive of these numerals as the lower limit value and the upper limit value.

Fineness in this invention means an average fineness measured at 10 arbitrary points of a fiber, unless otherwise specifically noted.

"Parallel" in this invention means not only perfect parallel, but also near parallel. For example, in this specification, the warps in a regularly structured area of the fiber fabric are parallel to each other, and the wefts in the same area are again parallel to each other.

The fiber fabric of this invention is characterized in that the fiber fabric comprising warps and wefts; wherein either one of the warps and the wefts is configured by a polyamide resin fiber composed of a polyamide resin composition, and the other is configured by a continuous carbon fiber; in an arbitrary square area of the fiber fabric (occasionally referred to as "square (X)", hereinafter), one side of the arbitrary square area is aligned in parallel to the warps, and other one side of the arbitrary square area is aligned in parallel to the wefts, the continuous carbon fiber has an average length 1.1 to 1.6 times longer than the length of a side of the square; the polyamide resin composition contains a polyamide resin in which 50% by mole or more of diamine structural units thereof is derived from xylylenediamine; and wherein the polyamide resin has a number-average molecular weight (Mn) of 6,000 to 30,000, and 0.5 to 5% by mass of the polyamide resin has a molecular weight of 1,000 or smaller.

With such configuration, the fiber fabric is now capable of balancing the shapability and mechanical strength which are generally considered as contradictory.

The fiber fabric of this invention is generally such that either one of the warps and wefts is configured by the polyamide resin fiber composed of a polyamide resin composition, and the other one is configured by the continuous carbon fiber. The polyamide resin fibers and the continuous carbon fibers composing the warps and wefts are generally polyamide resin fiber bundle and continuous carbon fiber bundle. Each of these fiber bundles used here may be manufactured typically by treating the fibers with a treating agent to make the fibers into bundles. These fibers will be detailed later.

In this invention, in the square (X), the continuous carbon fiber has an average length 1.1 to 1.6 times, and preferably 1.2 to 1.5 times, longer than the length of a side of the square. In these ranges, the effect of this invention tends to be exhibited more effectively.

In this invention, again in the square (X), the polyamide resin fiber has an average length preferably 1.0 to 1.6 times longer than the length of a side of the square (X), wherein the ratio is more preferably 1.1 to 1.5 times, and particularly 1.1 to 1.2 times. In these ranges, the effect of this invention tends to be exhibited more effectively.

The square (X) in this context means a square area selected from a regularly structured region of the fiber fabric, wherein one side of the square is aligned in parallel to the warps, and other one side of the square is aligned in parallel to the wefts. FIG. 1 illustrates an exemplary square (X) of the fiber fabric of this invention, where the vertical lines in the square represent the warps, and the horizontal lines represent the wefts. Accordingly, any arbitrary square of the fiber fabric will give equal average lengths.

Form of the fiber fabric of this invention is arbitrarily selectable from plain weave fabric, eight-harness satin fabric, four-harness satin fabric, twill fabric and so forth without special limitation, where plain weave fabric is is preferable. The plain weave fabric also may be a so-called basket weave. The fiber fabric is preferably a plain weave fabric, and more preferably a plain weave fabric woven by allowing every single warp and every single weft to alternatively cross over and to cross under. The fiber fabric may be manufactured by any of publicly-known methods.

The fiber fabric of this invention preferably has a weight per unit area of 50 to 1000 $g/m^2$, and more preferably 100 to 900 $g/m^2$. In these ranges, handleability of the fiber fabric will be improved, the fiber fabric will be less likely to cause shifting of fiber in a further process of molding the fiber fabric, and thereby a molded article having an improved mechanical strength will be obtained.

Next, the polyamide resin fiber and the continuous carbon fiber used in this invention will be described.

<Polyamide Resin Fiber>

The polyamide resin fiber used in this invention is a fibrous product of a polyamide resin composition which contains a polyamide resin in which 50% by mole or more of the diamine structural units thereof is derived from xylylenediamine, the polyamide resin has a number-average molecular weight (Mn) of 6,000 to 30,000, and 0.5 to 5% by mass of the polyamide resin has a molecular weight of 1,000 or smaller.

The polyamide resin fibers used in this invention is preferably a polyamide resin fiber bundle having a surface of the fibers treated with a treating agent.

«Characteristics of Polyamide Resin Fiber»

The polyamide resin fiber used in this invention is a continuous fibrous product of the polyamide resin composition, and has a length exceeding 6 mm. While the average length of the polyamide resin fiber used in this invention is not specifically limited, it preferably falls in the range from 1 to 20,000 m, more preferably 100 to 10,000 m, and furthermore preferably 1,000 to 7,000 m, from the viewpoint of improving the moldability.

The polyamide resin fiber used in this invention is generally manufactured by using the polyamide resin fiber bundle which is a bundle of the polyamide resin fibers, wherein the total fineness per one polyamide resin fiber bundle is preferably 40 to 600 dtex, more preferably 50 to 500 dtex, and furthermore preferably 200 to 400 dtex. In these ranges, the effect of this invention will be exhibited more effectively. The number of fibers composing the polyamide resin fiber bundle is preferably 1 to 200 f, more preferably 1 to 50 f, furthermore preferably 5 to 45 f, and particularly 20 to 40 f. In these ranges, the effect of this invention will be exhibited more effectively.

The polyamide resin fiber bundle used in this invention preferably has a tensile strength of 2 to 10 gf/d. In this range, the effect of this invention tends to be exhibited more effectively.

«Treatment Agent for Polyamide Resin Fiber»

The polyamide resin fiber used in this invention is preferably used in the form of fiber bundle after treated with a treating agent.

The treating agent for the polyamide resin fiber used in this invention is not specifically limited, and will suffice if the treatment agent functions to bundle the polyamide resin fibers into fiber bundle. The treating agent is preferably exemplified by ester-base compound, alkylene glycol-base compound, polyolefin-base compound, and phenyl ether-base compound, and is more preferably exemplified by a surfactant.

The amount of consumption of the treating agent for the polyamide resin fibers, when used, is preferably 0.1 to 2% by mass, and more preferably 0.5 to 1. 5% by mass, relative to the polyamide resin fibers.

«Method of Treating Polyamide Resin Fiber with Treating Agent»

Method of treating the polyamide resin fiber with the treating agent is not specifically limited, so long as the expected goal is achieved. An exemplary method is such as adding the polyamide resin fibers to the treating agent dissolved in a solution, to thereby allow the treating agent to adhere onto the surface of the polyamide resin fibers. The treatment may alternatively be accomplished by air blowing.

«Polyamide Resin Composition»

The polyamide resin fiber in this invention is composed of a polyamide resin composition, wherein the polyamide resin composition is mainly composed of a polyamide resin (the polyamide resin generally accounts for 90% by mass or more of the composition) . The polyamide resin is such that 50% by mole or more of the diamine structural units of the polyamide resin is derived from xylylenediamine, that the polyamide resin has a number-average molecular weight (Mn) of 6,000 to 30,000, and that 0.5 to 5% by mass of the polyamide resin has a molecular weight of 1,000 or smaller.

The polyamide resin used in this invention is a fibrous product of a polyamide resin in which 50% by mole or more of the diamine structural units of the polyamide resin (structural unit derived from diamine) is derived from xylylenediamine. That is, the polyamide resin is a xylylenediamine-base polyamide resin in which 50% by mole or more of the diamine structural units is derived from xylylenediamine and which is a polycondensation of the diamine with a dicarboxylic acid.

The polyamide resin is a xylylenediamine-base polyamide resin in which 70% by mole or more, and preferably 80% by mole or more, of the diamine structural units thereof is derived from metaxylylenediamine and/or paraxylylenediamine, and preferably 50% by mole or more, more preferably 70% by mole or more, and particularly 80% by mole or more, of the dicarboxylic acid structural units (structural unit derived from dicarboxylic acid) is derived from straight chain $\alpha,\omega$-aliphatic dicarboxylic acid having 4 to 20 carbon atoms.

Diamines other than metaxylylenediamine and paraxylylenediamine, usable as a source diamine component for the xylylenediamine-base polyamide resin, is exemplified by aliphatic diamines such as tetramethylenediamine, pentamethylenediamine, 2-methyl pentanediamine, hexamethylenediamine, heptamethylenediamine, octamethylenediamine, nonamethylenediamine, decamethylenediamine, dodecamethylenediamine, 2,2,4-trimethyl -hexamethylenediamine, and 2,4,4-trimethyl hexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and aromatic diamines such as bis(4-aminophenyl)ether, paraphenylenediamine, and bis (aminomethyl) naphthalene, all of which may be used independently, or two or more species may be used in combination.

When the diamine other than xylylenediamine is used as the diamine component, the ratio of consumption thereof is preferably 50% by mole or less of the diamine structural units, more preferably 30% by mole or less, furthermore preferably 1 to 25% by mole, and particularly 5 to 20% by mole.

The straight chain $\alpha,\omega$-aliphatic dicarboxylic acid polyamide resin having 4 to 20 carbon atoms, which may preferably be used as the source dicarboxylic acid component, is exemplified by aliphatic dicarboxylic acids such as succinic acid, glutaric acid, pimelic acid, suberic acid, azelaic acid, adipic acid, sebacic acid, undecanedioic acid, and dodecanedioic acid, all of which may be used independently or two or more species may be used in combination. Among them, adipic acid and sebacic acid are preferable since the resultant polyamide resin will have a melting point suitable for molding. Sebacic acid is particularly preferable.

Dicarboxylic acid component other than the straight chain $\alpha,\omega$-aliphatic dicarboxylic acid having 4 to 20 carbon atoms is exemplified by phthalic acid compounds such as isophthalic acid, terephthalic acid and orthophthalic acid; and naphthalene dicarboxylic acids including isomers of 1,2-naphthalene dicarboxylic acid, 1, 3-naphthalene dicarboxylic acid, 1, 4-naphthalene dicarboxylic acid, 1, 5-naphthalene dicarboxylic acid, 1, 6-naphthalene dicarboxylic acid, 1, 7-naphthalene dicarboxylic acid, 1, 8-naphthalene dicarboxylic acid, 2,3-naphthalene dicarboxylic acid, 2, 6-naphthalene dicarboxylic acid, and 2,7-naphthalene dicarboxylic acid, all of which may be used independently, or two or more species may be used in combination.

When a dicarboxylic acid, other than the straight chain $\alpha,\omega$-aliphatic dicarboxylic acid having 4 to 20 carbon atoms is used as the dicarboxylic acid component, it is preferable to use terephthalic acid or isophthalic acid, from the viewpoint of moldability and barrier performance. The ratio of terephthalic acid and isophthalic acid is preferably 30% by mole or less of the dicarboxylic acid structural unit, more preferably 1 to 30% by mole, and particularly 5 to 20% by mole.

As a constituent of the polyamide resin other than the diamine component and the dicarboxylic acid component, also usable as a copolymerizable component are lactams such as $\epsilon$-caprolactam and laurolactam; and aliphatic aminocarboxylic acids such as aminocaproic acid and aminoundecanoic acid, without ruining the effects of this invention.

Preferable examples of the polyamide resin include polymetaxylylene adipamide resin, polymetaxylylene sebacamide resin, polyparaxylylene sebacamide resin, and, polymetaxylylene/paraxylylene mixed adipamide resin obtained by polycondensation of a mixture of xylylenediamine of metaxylylenediamine and paraxylylenediamine with adipic acid. More preferable examples thereof include polymetaxylylene sebacamide resin, polyparaxylylene sebacamide resin, and, polymetaxylylene/paraxylylene mixed sebacamide resin obtained by polycondensation of a mixture of xylylenediamine of metaxylylenediamine and paraxylylenediamine with sebacic acid. These polyamide resins tend to be improved in moldability.

In this invention, the polyamide resin has a number-average molecular weight (Mn) of 6,000 to 30,000, and 0.5 to 5% by mass of the polyamide resin has a molecular weight of 1,000 or smaller.

If the number-average molecular weight (Mn) falls outside the range from 6,000 to 30,000, the resultant fiber fabric or the molded article thereof will degrade the strength. The number-average molecular weight (Mn) preferably ranges from 8,000 to 28,000, more preferably ranges from 9,000 to 26,000, furthermore preferably ranges from 10,000 to 24,000, particularly from 11,000 to 22,000, and still particularly from 12,000 to 20,000. In these ranges, good levels of heat resistance, elastic modulus, dimensional stability and moldability are achieved.

Now, the number-average molecular weight (Mn) in this context is calculated by the equation below, using terminal amino group concentration [NH$_2$] (microequivalent/g) and terminal carboxyl group concentration [COOH] (microequivalent/g) of the polyamide resin.

$$\text{Number-average molecular weight (Mn)}$$
$$= 2,000,000/([\text{COOH}]+[\text{NH}_2])$$

The polyamide resin necessarily contains 0.5 to 5% by mass of the polyamide resin having a molecular weight of 1,000 or smaller. By containing such amount of such low-molecular-weight component, the polyamide resin will be improved in the impregnating performance, or, improved in the fluidity through the reinforcing fibers in the polyamide resin in the process of working under heating, so that voids may be prevented from generating in the process of working, and thereby the resultant molded article may be improved in the strength. If the content exceeds 5% by mass, the low-molecular-weight component will breed to reduce the strength, and to degrade the appearance of the molded article.

The content of the component having a molecular weight of 1,000 or smaller is preferably 0.6 to 4.5% by mass, more preferably 0.7 to 4% by mass, furthermore preferably 0.8 to 3.5% by mass, particularly 0.9 to 3% by mass, and most preferably 1 to 2.5% by mass.

The content of the low-molecular-weight component having a molecular weight of 1,000 or smaller is adjustable by controlling melt-polymerization conditions including temperature and pressure of polymerization of polyamide resin, and rate of dropwise addition of diamine. The content of the low-molecular-weight component is adjustable to an arbitrary ratio, particularly by reducing the inner pressure of a reactor in the late stage of melt-polymerization to thereby remove the low-molecular-weight component. Alternatively, the polyamide resin manufactured by the melt-polymerization may be extracted with hot water to remove the low-molecular-weight component, or the melt-polymerization may be followed by solid phase polymerization under reduced pressure to remove the low-molecular-weight component. In the solid phase polymerization, the content of the low-molecular-weight component is adjustable to an arbitrary value, by controlling the temperature or degree of evacuation. Still alternatively, the content of the low-molecular-weight component having a molecular weight of 1,000 or smaller is adjustable by adding it later to the polyamide resin.

Now, the content of the component having a molecular weight of 1,000 or smaller may be measured by gel permeation chromatography using "HLC-8320GPC" from Tosoh Corporation, given in standard polymethyl methacrylate (PMMA) equivalent values. The measurement may be conducted using two "TSKgel Super HM-H" columns, a 10 mmol/l sodium trifluoroacetate solution in hexafluoroisopropanol (HFIP) as a solvent, at a resin concentration of 0.02% by mass, column temperature of 40°C, flow rate of 0.3 ml/min, and using a refractive index detector (RI) . A standard curve is prepared by dissolving 6 levels of concentration of PMMA in HFIP.

In the polyamide resin composition, it is preferable that 0.01 to 1% by mass of the polyamide resin is a cyclic compound (polyamide resin) . The cyclic compound in this invention means a ring-form salt composed of a diamine component and a dicarboxylic acid component which are source materials for the polyamide resin, and may be quantified by the method described below.

A pellet of the polyamide resin is milled using an ultracentrifugal mill, screened through a 0.25 mm mesh, and 10 g of the resultant powder sample having a grain size of 0.25 mm or smaller is weighed in a thimble. The sample is then extracted in 120 ml of methanol for 9 hours using a Soxhlet extractor, and the obtained liquid extract is condensed to 10 ml in an evaporator, while taking care so as not to dry up the extract. Any oligomer possibly deposit in this process is properly removed by filtration through a PTFE filter. The obtained liquid extract is diluted 50-fold with methanol, and subjected to quantitative analysis by HPLC using a high-performance liquid chromatography apparatus from Hitachi High-Technologies Corporation, to determine the content of cyclic compound.

With such range of content of cyclic compound, the obtained fiber fabric and the molded article using the same may be improved in strength, suppressed in warping, and tend to be further improved in dimensional stability.

The content of the cyclic compound is more preferably 0.05 to 0.8% by mass relative to the polyamide resin, and more preferably 0.1 to 0.5% by mass.

In many cases, the polyamide resin manufactured by melt polymerization contains a considerable amount of cyclic compound which is generally removed by hot water extraction. The amount of cyclic compound is controllable by controlling the degree of hot water extraction. Alternatively, the control is enabled by controlling the pressure of melt polymerization.

The polyamide resin used in this invention preferably has a molecular weight distribution (weight-average molecular weight/number-average molecular weight (Mw/Mn)) of 1.8 to 3.1. The molecular weight distribution is more preferably 1.9 to 3.0, and furthermore preferably 2.0 to 2.9. With the molecular weight distribution controlled in these ranges, the fiber fabric having good mechanical characteristics becomes more easily obtainable.

The molecular weight distribution of polyamide resin is controllable by properly selecting species and amount of an initiator or catalyst used for polymerization, and conditions for polymerization reaction such as reaction temperature, pressure, time and so forth. The molecular weight distribution is also controllable by mixing a plurality of species of polyamide resins having different average molecular weights obtained under different polymerization conditions, or, subjecting the polyamide resin after polymerization to fractional precipitation.

The molecular weight distribution may be determined by GPC measurement. More specifically, measurement is made by using an apparatus "HLC-8320GPC" from Tosoh Corporation, two columns "TSK gel Super HM-H" from Tosoh Corporation, and a 10 mmol/l sodium trifluoroacetate solution in hexafluoroisopropanol (HFIP) as an eluent, under conditions including a resin concentration of 0.02% by mass, a column temperature of 40°C, and a flow rate of 0.3 ml/min, and using a refractive index detector (RI), thereby the molecular weight distribution is obtained as an standard polymethyl methacrylate equivalent value. A standard curve is prepared by dissolving 6 levels of concentration of PMMA dissolved in HFIP.

The polyamide resin preferably has a melt viscosity of 50 to 1200 Pa·s, when measured at a temperature 30°C higher than the melting point of polyamide resin, a shear velocity of 122 sec$^{-1}$, and a moisture content of polyamide resin of 0.06% by mass or below. With the melt viscosity controlled in this range, the polyamide resin will be more easily processed to give film or fiber. Note, for the case where the polyamide resin has two or more melting points as described later, the measurement is made assuming the peak top temperature of an endothermic peak, which appears on the higher temperature side, as the melting point.

The melt viscosity more preferably falls in the range from 60 to 500 Pa·s, and furthermore preferably from 70 to 100 Pa·s.

The melt viscosity of polyamide resin is controllable by properly selecting ratio of feed of the source dicarboxylic acid component and diamine component, polymerization catalyst, molecular weight modifier, polymerization temperature and polymerization time.

The polyamide resin preferably has a retention rate of flexural modulus under water absorption of 85% or more. With the retention rate of flexural modulus under water absorption controlled in this range, the obtained fiber fabric and the molded article thereof will tend to cause less degradation in physical properties under high temperature and high humidity, and to cause less geometrical changes such as warping.

Now, the retention rate of flexural modulus under water absorption is defined as a ratio (%) of flexural modulus of a bending test piece made of the polyamide resin under 0.5%-by-mass water absorption, relative to flexural modulus under 0.1%-by-mass water absorption, meaning that, the larger the ratio, the less likely the flexural modulus reduces even after water absorption.

The retention rate of flexural modulus under water absorption is more preferably 90% or above, and furthermore preferably 95% or above.

The retention rate of flexural modulus of the polyamide resin under water absorption is controllable typically based on the ratio of mixing of paraxylylenediamine and metaxylylenediamine, where the larger the ratio of paraxylylenediamine, the better the retention rate of flexural modulus will be. This is also controllable by controlling the degree of crystallinity of the bending test piece.

Water absorption rate of the polyamide resin, immersed in water at 23°C for one week, and then measured immediately after taken out from water and wiped, is preferably 1% by mass or below, more preferably 0.6% by mass or below, and furthermore preferably 0.4% by mass or below. In these ranges, the obtained fiber fabric and the molded article composed thereof become easy to prevent deformation due to water absorption, and can suppress foaming when the fiber fabric is molded under heating and pressurizing, thereby the molded article with a less content of bubble may be obtained.

The polyamide resin preferably used here has a terminal amino group concentration ($[NH_2]$) of less than 100 microequivalent/g, more preferably 5 to 75 microequivalent/g and furthermore preferably 10 to 60 microequivalent/g, whereas preferably has a terminal carboxyl group concentration ($[COOH]$) of less than 150 microequivalent/g, more preferably 10 to 120 microequivalent/g, and furthermore preferably 10 to 100 microequivalent/g. By using the polyamide resin having such terminal group concentration values, the polyamide resin tends to become easier to stabilize the viscosity when processed into film or fiber, and tends to become more reactive with a carbodiimide compound described later.

Ratio of the terminal amino group concentration relative to the terminal carboxy group concentration ($[NH_2]/[COOH]$) is preferably 0.7 or below, more preferably 0.6 or below, and particularly 0.5 or below. If the ratio exceeds 0.7, the polyamide resin may become difficult to control the molecular weight during polymerization.

The terminal amino group concentration may be measured by dissolving 0.5 g of polyamide resin into 30 ml of a phenol/methanol (4:1) mixed solution at 20 to 30°C under stirring, and by titrating the solution with a 0.01 N hydrochloric acid. Meanwhile, the terminal carboxy group concentration may be measured by dissolving 0.1 g of polyamide resin into 30 ml of benzyl alcohol at 200°C, and 0.1 ml of phenol red solution is added in the range from 160°C to 165°C. The obtained solution is titrated with a titrant prepared by dissolving 0.132 g of KOH into 200 ml of benzylalcohol (0.01 mol/l in terms of KOH concentration), to find an end point where the color turns from yellow to red and stays in red, based on which the concentration may be calculated.

The polyamide resin in this invention preferably has a molar ratio of reacted diamine unit relative to reacted dicarboxylic acid unit (number of moles of reacted diamine/number of moles of reacted dicarboxylic acid, occasionally be referred to as "reacted molar ratio") of 0.97 to 1.02. Within such range, it now becomes easier to control the molecular weight and molecular weight distribution of the polyamide resin within arbitrary ranges.

The reacted molar ratio is more preferably smaller than 1.0, furthermore preferably smaller than 0.995, and particularly smaller than 0.990, where the lower limit is preferably 0.975 or above, and more preferably 0.98 or above.

The reacted molar ratio (r) is given by the equation below:

$$r=(1-cN-b(C-N))/(1-cC+a(C-N))$$

where,

    a: M1/2
    b: M2/2
    c: 18.015 (molecular weight of water (g/mol))
    M1: molecular weight of diamine (g/mol)
    M2: molecular weight of dicarboxylic acid (g/mol)
    N: terminal amino group concentration (equivalent/g)
    C: terminal carboxy group concentration (equivalent/g)

For the case where the diamine components and the dicarboxylic acid components which each have a variety of molecular weights, are used as the monomers for synthesizing the polyamide resin, M1 and M2 are of course calculated depending on the ratio of mixing (molar ratio) of the monomers mixed as the source materials. Note that, the molar ratio of monomers initially fed agrees with the reacted molar ratio, if a synthesis tank forms a perfect closed system. Actual synthetic apparatus, however, cannot be a perfect closed system, so that the molar ratio of initial feeding does not always agree with the reacted molar ratio. Even it is considered that the initially fed monomers do not always react completely, so that again the molar ratio of initial feedings does not always agree with the reacted molar ratio. Accordingly, the reacted molar ratio means the molar ratio of monomers actually reacted which is determined based on the terminal group concentration of the resultant polyamide resin.

The reacted molar ratio of the polyamide resin is controllable by selecting proper values for reaction conditions which include molar ratio of initial feeding of the source dicarboxylic acid component and the source diamine component, reaction time, reaction temperature, speed of dropwise addition of xlylenediamine, pressure in the reaction tank, and start time of evacuation.

When the polyamide resin is manufactured by a so-called salt process, the reacted molar ratio is controllable to 0.97 to 1.02, specifically by, for example, presetting the ratio of source diamine component/source dicarboxylic acid component in this range, and by allowing the reaction to proceed sufficiently. For the case where diamine is added dropwise continuously into molten dicarboxylic acid, besides controlling the ratio of initial feeding within this range, it is alternatively possible to control the amount of diamine to be refluxed during the dropwise addition of diamine, and to remove diamine having been added dropwise out from the reaction system. Diamine may be removed out from the system, specifically by controlling temperature of a reflux tower within an optimum range, or by controlling the shape and/or amount of packing of a packed column, such as so-called raschig ring, lessing ring and saddle. Unreacted portion of diamine may be removed alternatively by shortening the reaction time after the dropwise addition. Still alternatively, the unreacted portion of diamine may be removed out from the system by optionally controlling the rate of dropwise addition of diamine. By these methods, it is now possible to control the molar ratio or reaction within a predetermined range, even if the ratio of initial feeding deviates from a target range.

Method of manufacturing the polyamide resin is not specifically limited, instead may be any of publicly known methods under known conditions for polymerization. In the process of polycondensation of the polyamide resin, a small amount of monoamine or monocarboxylic acid may be added as a molecular weight modifier. For example, the polyamide resin may be manufactured by a method of heating a salt, which is composed of a diamine component containing xylylenediamine and a dicarboxylic acid such as adipic acid or sebacic acid, in the presence of water under pressure, and allowing polymerization to proceed in a molten state, while removing the added water or released water resulted from condensation. Alternatively, the polyamide resin may be manufactured by adding xylylenediamine directly to the molten dicarboxylic acid, and allowing polycondensation to proceed under normal pressure. In this process, in order to maintain the reaction system in the form of homogeneous liquid, diamine is consecutively added to dicarboxylic acid, during which the polycondensation is allowed to proceed, while heating the reaction system so that the reaction temperature would not fall below the melting points of oligoamide and polyamide produced therein.

The polyamide resin, having been manufactured by melt polymerization, may further be subjected to solid-phase polymerization. Method of solid phase polymerization is not specifically limited, instead may be any of publicly known methods under known conditions for polymerization.

In this invention, the melting point of the polyamide resin is preferably 150 to 310°C, and more preferably 180 to 300°C.

The glass transition point of the polyamide resin is preferably 50 to 100°C, more preferably 55 to 100°C, and particularly 60 to 100°C. In these ranges, the polyamide resin tends to be improved in heat resistance.

Now, the melting point is a peak top temperature of an endothermic peak observed in DSC (differential scanning calorimetry). Glass transition point is measured by once heating and melting a sample so as to cancel any possible influences of thermal history on the crystallinity, and then re-heating the sample. Measurement may be made by using, for example, "DSC-60" from Shimadzu Corporation, approximately 5 mg of sample, nitrogen as an atmospheric gas fed at a flow rate of 30 ml/min, and at a heating rate of 10°C/min from room temperature up to a temperature not lower than a predicted melting point, where the melting point is determined based on the peak top temperature of an endothermic peak observed for the molten sample. The glass transition point is determined by rapidly cooling the molten polyamide resin on dry ice, then heating again at a rate of 10°C/min up to a temperature not lower than the melting point.

The polyamide resin composition used in this invention may contain other polyamide resin other than the xylylenediamine-base polyamide resin described above, and an elastomer component. The other polyamide resin is exemplified by polyamide 66, polyamide 6, polyamide 46, polyamide 6/66, polyamide 10, polyamide 612, polyamide 11, polyamide 12, hexamethylenediamine, polyamide 66/6T composed of adipic acid and terephthalic acid, hexamethylenediamine, and polyamide 6I/6T composed of isophthalic acid and terephthalic acid. The amount of mixing of these compounds is preferably 5% by mass or less of the polyamide resin composition, and more preferably 1% by mass or less.

The elastomer component usable here may be any of publicly known elastomers such as polyolefin-base elastomer, diene-base elastomer, polystyrene-base elastomer, polyamide-base elastomer, polyester-base elastomer, polyurethane-base elastomer, fluorine-containing elastomer, and silicone-base elastomer, among which polyolefin-base elastomer and polystyrene-base elastomer are preferable.

Also preferably used as the elastomer is modified elastomer which is modified by $\alpha,\beta$-unsaturated carboxylic acid and acid anhydride thereof, or by acrylamide and derivative thereof, in the presence or absence of a radical initiator, in order to make the elastomer compatible with the polyamide resin.

The content of such other polyamide resin or the elastomer is generally 30% by mass or less in the polyamide resin composition, preferably 20% by mass or less, and particularly 10% by mass or less.

For the polyamide resin composition described above, a single species of polyamide resin may be used independently, or a plurality of species may be used in a mixed form.

Still alternatively, to the polyamide resin composition used in this invention, a single species or a plurality of species of resins, such as polyester resin, polyolefin resin, polyphenylene sulfide resin, polycarbonate resin, polyphenylene ether resin, and polystyrene resin maybe added, without ruining the purposes and effects of this invention. The amount of mixing of these resins is preferably 10% by mass or less of the polyamide resin composition, and more preferably 1% by mass or less.

To the polyamide resin composition used in this invention, it is also possible to add additives which include stabilizers such as antioxidant and heat stabilizer, hydrolysis resistance modifier, weathering stabilizer, matting agent, UV absorber, nucleating agent, plasticizer, dispersion aid, flame retarder, anti-static agent, anti-coloring agent, anti-gelling agent, colorant, and mold releasing agent, without ruining purposes and effects of this invention. Details of these additives may be referred to description in paragraphs [0130] to [0155] of Japanese Patent No. 4894982, the contents of which is incorporated into this specification.

<Continuous Carbon Fiber>

The fiber fabric of this invention contains the continuous carbon fiber. The continuous carbon fiber means a carbon fiber having a length exceeding 6 mm. While the average length of the continuous carbon fiber bundle used in this invention is not specifically limited, it preferably falls in the range from 1 to 10,000 m from the viewpoint of improving the moldability, more preferably from 100 to 10,000 m, and furthermore preferably from 1,000 to 7,000 m.

The continuous carbon fiber bundle preferably has an average fineness of 50 to 2000 tex (g/1000 m), more preferably 60 to 800 tex, and furthermore preferably 60 to 500 tex. In these ranges, the workability is improved, and the obtainable fiber fabric will be improved in elastic modulus and strength.

The continuous carbon fiber bundle preferably has an average tensile elastic modulus of 50 to 1000 GPa. Within this range, the molded article will have further improved strength.

As the continuous carbon fiber, preferably used are polyacrylonitrile-base carbon fiber, and pitch-base carbon fiber. Also plant-derived carbon fibers, such as lignin and cellulose, are usable.

«Treating Agent for Continuous Carbon Fiber»

The continuous carbon fiber used in this invention is preferably treated with a treating agent. The treating agent for the continuous carbon fiber is exemplified by surface treating agent and sizing agent.

The surface treatment agent is exemplified by functional surface treatment agents, such as epoxy-base compound, acryl-base compound, isocyanate-base compound, silane-base compound, and titanate-base compound, which are specifically silane-base coupling agent, titanate-base coupling agent and so forth, wherein the silane-base coupling agent is preferable.

The silane-base coupling agent is exemplified by trialkoxy or triaryloxy silane compounds such as aminopropyltriethoxysilane, phenylaminopropyltrimethoxysilane, glycidylpropyltriethoxysilane, methacryloxypropyltrimethoxysilane, and vinyltriethoxysilane; ureido silane, sulfide silane, vinyl silane, and imidazole silane.

The sizing agent is preferably exemplified by epoxy-base resin such as bisphenol A-type epoxy resin; and vinyl ester-base resins exemplified by epoxy acrylate resins having an acryl group or methacryl group in one molecule, such as bisphenol A-type vinyl ester resin, novolac-type vinyl ester resin, and brominated vinyl ester resin. Also urethane-modified resins of epoxy-base resin and vinyl ester-base resin are usable.

The amount of the treating agent is preferably 0.001 to 1.5% by mass of the continuous carbon fiber, more preferably 0.1 to 1.2% by mass, and furthermore preferably 0.5 to 1.1% by mass. Within these ranges, the effects of this invention will be exhibited more effectively.

«Method of Treating Continuous Carbon Fiber with Treating Agent»

Method of treating continuous carbon fiber with the treating agent may be any of known methods. For example, the continuous carbon fiber is added to a solution which contains the treating agent dissolved therein, so as to make the treating agent adhere to the surface of the continuous carbon fiber. Alternatively, the treating agent may be blown by air to the surface of the continuous carbon fiber.

Commercially available continuous carbon fiber, which might have been treated on the surface thereof with a treating agent such as surface treatment agent or sizing agent, may be used without modification. Alternatively, in order to treat the continuous carbon fiber with a desired amount of treating agent, the fiber may be washed once to remove the precoated surface treatment agent or sizing agent, and then re-treated.

<Molded Article>

The fiber fabric of this invention may be molded by using a die or the like, shaped to be suitable for applications and then heated, or, shaped under heating.

The fiber fabric of this invention is usable for various molded articles. In particular the fiber fabric of this invention, having good shapability and mechanical strength, is preferably used for molded articles such having a corner as a box body for office automation equipment and communication equipment.

More specifically, the molded article of this invention is preferably used for parts and housings of electric/electronic equipment such as personal computer, office automation equipment, audio visual equipment and mobile phone, optical equipment, precision equipment, toy, home/office appliance, and also used for parts for vehicle, aircraft and vessel.

EXAMPLE

This invention will be further detailed referring to Examples. Materials, amount of consumption, ratio, details of treatment, and procedures or treatment may suitably be modified without departing from the spirit of this invention. The scope of this invention is, therefore, not limited by the specific examples described below.

1. Manufacture of Polyamide Resin Fiber

<Polyamide Resin>

As the polyamide resin, used were a polyamide resin obtained by exemplary manufacture described below, and a commercially available metaxylylene adipamide resin (MXD6) described below.

- Metaxylylene adipamide resin MXD6: metaxylylene adipamide resin (from Mitsubishi Gas Chemical Company, Inc., grade S6007), number-average molecular weight=25000, content of component with a molecular weight or 1000 or smaller=0.51% by mass

«Exemplary Manufacture 1»

(Synthesis of Polyamide (MPXD10))

Sebacic acid was heated and melted in a reaction vessel under a nitrogen atmosphere, the content is kept stirred, and heated to 235 °C, while gradually adding dropwise a 3:7 (by mole) mixture of paraxylylenediamine (from Mitsubishi Gas Chemical Company, Inc.) and metaxylylenediamine (from Mitsubishi Gas Chemical Company, Inc.) under pressure (0.35 MPa), so as to adjust the molar ratio of diamine and sebacic acid to approximately 1:1. After completion of the dropwise addition, the reaction was allowed to proceed for 60 minutes, to thereby control the content of component having a molecular weight of 1,000 or smaller. After completion of the reaction, the content was drawn into strands, and pelletized using a pelletizer, to thereby obtain polyamide (MPXD10). The polyamide will be referred to as "MPXD10", hereinafter.

«Exemplary Manufacture 2»

(Synthesis of Polyamide (PXD10))

Into a 50-liter reaction vessel equipped with a stirrer, a partial condenser, a cooler, a thermometer, a dropwise dispenser, a nitrogen gas introducing pipe, and a strand die, 8950 g (44.25 mol) of sebacic acid (Sebacic Acid TA, from Itoh Oil Chemicals Co., Ltd.), 12.54 g (0.074 mol) of calcium hypophosphite, and 6.45 g (0.079 mol) of sodium acetate, each precisely-weighed, were placed. After thoroughly replacing the inner space of the reaction vessel with nitrogen, the atmosphere is pressurized with nitrogen to 0.4 MPa, and sebacic acid was uniformly melted under stirring while elevating the temperature from 20°C to 190°C over 55 minutes. Next, 5960 g (43.76 mol) of paraxylylenediamine (from Mitsubishi Gas Chemical Company, Inc.) was added dropwise over 110 minutes under stirring. During this process, the inner temperature of the reaction vessel was continuously elevated up to 293°C. In the dropwise addition, the pressure was controlled to 0.42 MPa, and the produced water was removed through the partial condenser and the cooler out of the system. Temperature of the partial condenser was controlled in the range from 145 to 147°C. After completion of the partial addition of paraxylylenediamine, the polycondensation reaction was allowed to continue for 20 minutes, while keeping the inner pressure of reaction vessel at 0.42 MPa. During this process, the inner temperature of reaction vessel was elevated up to 296°C. Thereafter, the inner pressure of the reaction vessel was reduced from 0.42 MPa down to 0.12 MPa over 30 minutes. In this process, the inner temperature elevated up to 298°C. The inner pressure was then reduced at a rate of 0. 002 MPa/min down to 0.08 MPa over 20 minutes, to thereby control the content of component having a molecular weight of 1,000 or smaller. The inner temperature of the reaction vessel upon completion of pressure reduction was 301°C. Thereafter, the system was pressurized with nitrogen, and the polymer was drawn out through the strand die to produce strands, while keeping the inner temperature of the reaction vessel at 301°C, and the resin temperature at 301°C, cooled in cooling water at 20°C, and pelletized to obtain approximately 13 kg of polyamide resin. The cooling time in the cooling water was set to 5 seconds, and the take-up speed of strands was set to 100 m/min. The polyamide will be referred to as "PXD10", hereinafter.

Methods of measuring various physical properties of the polyamide resin were referred to those described in paragraphs [0157] to [0168] of Japanese Patent No. 4894982.

Properties of the polyamide resin are shown in Table below.

[Table 1]

| Kind of polyamide resin | | MPXD10 | PXD10 | MXD6 |
|---|---|---|---|---|
| [COOH] | microequivalent/g | 110 | 205 | 60 |
| [NH$_2$] | microequivalent/g | 40 | 17 | 20 |
| [NH$_2$]/[COOH] | - | 0.36 | 0.08 | 0.33 |
| Mn | - | 13333 | 9009 | 25000 |
| Content of component having a molecular weight of 1,000 or smaller | % by mass | 0.75 | 1.33 | 0.51 |
| Mw/Mn | - | 2.00 | 2.55 | 1.86 |
| Melt viscosity | Pa·s | 191 | 87 | 650 |
| Retention rate of flexural modulus under water absorption | % | 93 | 100 | 92 |

(continued)

| Kind of polyamide resin | | MPXD10 | PXD10 | MXD6 |
|---|---|---|---|---|
| Melting point | °C | 215 | 280/290 | 239 |
| Glass transition point | °C | 63 | 75 | 85 |
| Content of Cyclic compound | % by mass | 0.12 | 0.5 | 0.7 |
| Water absorption rate | % by mass | 0.42 | 0.49 | 0.54 |
| Reacted molar ratio | - | 0.9894 | 0.9718 | 0.9951 |

<Fiber Making of Polyamide Resin>

The thus obtained polyamide resin was made into fiber according to the procedures below.

The polyamide resin was dried using a vacuum dryer at 150°C for 7 hours, melted and extruded using a single-screw extruder with a 30-mm-diameter screw, through a 60-hole die into strands. The extruded resin was cooled by blowing air to solidify. The fiber was coated with the treating agent using a roll of which the lower part is immersed in the treating agent, taken up through a plurality of guides onto a roll, sized and drawn, to thereby obtain polyamide resin fiber bundle.

The thus obtained polyamide resin fiber bundle was measured regarding various physical properties according to the procedures below.

«Fiber Diameter»

Cross section of the continuous thermoplastic resin fiber was observed under a scanning electron microscope (SEM), and the fiber diameter was measured at 10 arbitrary points of the fiber, to find an average value.

«Fineness»

Weight of fiber per 1 m was measured, and the measured value was converted into fineness.

«Tensile Strength»

The polyamide resin fiber bundle was subjected to tensile test using a tensile tester at 23°C, 50%RH. The maximum stress was divided by fineness, to determine the strength per unit fineness.

Properties of the polyamide resin fiber bundle are summarized in Table below.

[Table 2]

| | Number of Polyamide resin fiber | | |
|---|---|---|---|
| | PA fiber 1 | PA fiber 2 | PA fiber 3 |
| Kind of polyamide resin | MPXD10 | PXD10 | MXD6 |
| Fineness (dtex) | 230 | 360 | 600 |
| Tensile strength (gf/d) | 6 | 3 | 4 |

2. Continuous Carbon Fiber

The continuous carbon fiber used here was as follows:
C Fiber 1: polyacrylonitrile-base carbon fiber "TORAYCA T300-3000", from Toray Industries, Inc., 3000 fiber bundles, 1980 dtex, tensile elastic modulus=230 GPa, average diameter=7 $\mu$m)

3. Manufacture of Fiber fabric

Each fabric was woven on a rapier loom, using the thus obtained polyamide resin fiber bundle as the warp, and the continuous carbon fiber bundle as the weft. In this process, the number of picks was controlled so that the polyamide resin fiber bundle and the continuous carbon fiber bundle, measured in an arbitrary square (X) of the fiber fabric (where, two opposed sides of the square (X) are aligned in parallel to the warp, and the residual two sides are aligned in parallel to the weft), will have average fiber lengths (in mm), and mass per unit area as summarized in Table below. Now the average fiber length was measured by sampling an arbitrary square area of the fiber fabric, with two opposed sides aligned in parallel to the warp, and the residual two sides aligned in parallel to the weft, unbundling the fiber bundle which composes the fiber fabric to take out a single fiber, and measuring the length with a ruler.

<Measurement of Bending Strength>

The obtained fiber fabrics were stacked, pressed under heating at a temperature 20 °C higher than the melting point of the polyamide resin and at 3 MPa. A 2 mm (thickness) $\times$ 10 cm $\times$ 2 cm test piece was sampled from the obtained molded article, and subjected to bending strength test according to JIS K7171.

<Measurement of Shapability>

Each fiber fabric was pressed under heating in a semispherical mold having a deep of 2 cm and a diameter of 2 cm at a temperature 20°C higher than the melting point and at 1 MPa, to obtain a molded article. The molded article which was molded without deformation or wrinkle were judged as "good", and the molded article which has deformation or wrinkle were judged as "poor".

<Appearance of Molded Article>

The surfaces of the semispherical samples described above were observed, and the surfaces of the semispherical samples showing less disorderliness of the continuous carbon fiber were judged as "good", and the surfaces of the semispherical samples showing disorderliness of the continuous carbon fiber and degraded appearance were judges as "poor".

Results are summarized in Table below.

[Table 3]

|  | Example 1 | Example 2 | Example 3 | Comparative Example 1 | Comparative Example 2 |
|---|---|---|---|---|---|
| Kind of polyamide resin fiber | Pa fiber 1 | Pa fiber 2 | Pa fiber 3 | N6 | Pa fiber 1 |
| Kind of continuous carbon fiber | C fiber 1 | C fiber 1 | C fiber 1 | C fiber 1 | C fiber 1 |
| Average fiber length of polyamide resin fiber in square (X) (mm) | 11 | 11 | 12 | 11 | 12 |
| Average fiber length of polyamide resin fiber / length of side of square | 1.1 | 1.1 | 1.2 | 1.1 | 1.2 |
| Average fiber length of continuous carbon fiber in square (X) (mm) | 15 | 14 | 12 | 14 | 17 |
| Average fiber length of continuous carbon fiber / length of side of square | 1.5 | 1.4 | 1.2 | 1.4 | 1.7 |
| Mass per unit area (g/m$^2$) | 370 | 350 | 400 | 350 | 400 |
| Bending strength (MPa) | 800 | 900 | 1000 | 600 | 600 |
| Shapability of fiber fabric | good | good | good | good | good |
| Appearance of molded article | good | good | good | good | poor |

As is clear from Table above, the fiber fabrics of this invention were found to have high mechanical strength, and good shapability. In contrast, the fiber fabric (Comparative Example 1) using a polyamide resin other than that specified by this invention was found to show poor mechanical strength. Even if the polyamide resin fallen in the range specified by the invention were used, the obtained molded article was found to show degraded appearance, when the average length of the continuous carbon fiber fell outside the range of 1.1 to 1.6 times longer than the length of a side of the square (X) (Comparative Example 2) .

<Comparative Example 3>

The shapability of a composite material described in Example 1 of Japanese Patent No. 4894982 was measured as described above. The mechanical strength was found to be equivalent, but the carbon fiber on the surface was found to be disordered a little, and the appearance of the molded article was found to be inferior to the molded article of this invention, although at a practical level.

**Claims**

1. A fiber fabric comprising warps and wefts:

    wherein either one of the warps and the wefts is configured by a polyamide resin fiber composed of a polyamide resin composition, and the other is configured by a continuous carbon fiber;
    **characterised in that** in an arbitrary square area of the fiber fabric, one side of the arbitrary square area is aligned in parallel to the warps, and other one side of the arbitrary square area is aligned in parallel to the wefts, the continuous carbon fiber has an average length 1.1 to 1.6 times longer than the length of a side of the square; the polyamide resin composition contains a polyamide resin in which 50% by mole or more of diamine structural units thereof is derived from xylylenediamine; and
    wherein the polyamide resin has a number-average molecular weight (Mn) of 6,000 to 30,000, and 0.5 to 5% by mass of the polyamide resin has a molecular weight of 1,000 or smaller.

2. The fiber fabric of Claim 1, wherein the polyamide resin fiber has an average length 1.0 to 1.6 times longer than the length of a side of the square.

3. The fiber fabric of Claim 1 or 2, having a weight per unit area of 50 to 1000 $g/m^2$.

4. The fiber fabric of any one of Claims 1 to 3, wherein the polyamide resin contains 0.01 to 1% by mass of a cyclic compound.

5. The fiber fabric of any one of Claims 1 to 4, having a ratio of average fineness of the polyamide resin fiber and average fineness of the continuous carbon fiber (average fineness of polyamide resin fiber/average fineness of continuous carbon fiber) of 20/80 to 80/20.

6. A molded article obtainable by molding a fiber fabric described in any one of Claims 1 to 5.

**Patentansprüche**

1. Ein Fasergewebe, umfassend Kettfäden und Schussfäden:

    wobei einer von den Kett- und den Schussfäden durch eine Polyamidharzfaser, die aus einer Polyamidharzzusammensetzung besteht, konfiguriert ist und die anderen durch eine kontinuierliche Carbonfaser konfiguriert ist;
    **dadurch gekennzeichnet, dass** in einem beliebigen quadratischen Bereich des Fasergewebes eine Seite des beliebigen quadratischen Bereichs parallel zu den Kettfäden und eine andere Seite des beliebigen quadratischen Bereichs parallel zu den Schussfäden ausgerichtet ist, die kontinuierliche Carbonfaser eine durchschnittliche Länge, die 1,1 bis 1,6 mal länger als die Länge einer Seite des Quadrats ist, aufweist; die Polyamidharzzusammensetzung ein Polyamidharz enthält, in welchem 50 Mol-% oder mehr von Diamin-Struktureinheiten davon von Xylylendiamin abgeleitet sind; und wobei das Polyamidharz ein Zahlenmittel des Molekulargewichts (Mn) von 6.000 bis 30.000 aufweist und 0,5 bis 5 Massen-% des Polyamidharzes ein Molekulargewicht von 1.000 oder weniger aufweisen.

2. Das Fasergewebe nach Anspruch 1, wobei die Polyamidharzfaser eine durchschnittliche Länge, die 1,0 bis 1,6 mal länger als die Länge einer Seite des Quadrats ist, aufweist.

3. Das Fasergewebe nach Anspruch 1 oder 2 mit einem Gewicht pro Flächeneinheit von 50 bis 1000 $g/m^2$.

**4.** Das Fasergewebe nach einem der Ansprüche 1 bis 3, wobei das Polyamidharz 0,01 bis 1 Massen-% einer cyclischen Verbindung enthält.

**5.** Das Fasergewebe nach einem der Ansprüche 1 bis 4 mit einem Verhältnis der durchschnittlichen Feinheit der Polyamidharzfaser zur durchschnittlichen Feinheit der kontinuierlichen Carbonfaser (durchschnittliche Feinheit der Polyamidharzfaser/durchschnittliche Feinheit der kontinuierlichen Carbonfaser) von 20/80 bis 80/20.

**6.** Ein geformter Gegenstand, erhältlich durch Formen eines Fasergewebes, wie in einem der Ansprüche 1 bis 5 beschrieben.

**Revendications**

**1.** Etoffe de fibres comprenant des chaînes et des trames :

dans laquelle l'une parmi les chaînes et des trames est configurée par une fibre en résine de polyamide composée d'une composition de résine de polyamide, et l'autre est configurée par une fibre de carbone continue ; **caractérisée en ce que**, dans une surface carrée arbitraire de l'étoffe de fibres, un côté de la surface carrée arbitraire est aligné parallèlement aux chaînes, et un autre côté de la surface carrée arbitraire est aligné parallèlement aux trames, la fibre de carbone continue a une longueur moyenne 1,1 à 1,6 fois plus longue que la longueur d'un côté du carré ;
la composition de résine de polyamide contient une résine de polyamide dans laquelle 50 % en moles ou plus de ses motifs structurels diamine dérivent de xylylènediamine ; et
dans laquelle la résine de polyamide a une masse moléculaire moyenne en nombre (Mn) de 6 000 à 30 000, et 0,5 à 5 % en masse de la résine de polyamide ont une masse moléculaire de 1 000 ou moins.

**2.** Etoffe de fibres selon la revendication 1, dans laquelle la fibre de résine de polyamide a une longueur moyenne 1,0 à 1,6 fois plus longue que la longueur d'un côté du carré.

**3.** Etoffe de fibres selon la revendication 1 ou 2, ayant une masse par unité de surface de 50 à 1 000 g/m$^2$.

**4.** Etoffe de fibres selon l'une quelconque des revendications 1 à 3, dans laquelle la résine de polyamide contient 0,01 à 1 % en masse d'un composé cyclique.

**5.** Etoffe de fibres selon l'une quelconque des revendications 1 à 4, ayant un rapport de la finesse moyenne de la fibre de résine de polyamide à la finesse moyenne de la fibre de carbone continue (finesse moyenne de la fibre de résine de polyamide / finesse moyenne de la fibre de carbone continue) de 20/80 à 80/20.

**6.** Article moulé pouvant être obtenu par moulage d'une étoffe de fibres décrite dans l'une quelconque des revendications 1 à 5.

[Fig. 1]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1419875 A1

- JP 4894982 B